# EUROPEAN PATENT SPECIFICATION

(11) **EP 1 582 334 B1**
(45) Date of publication and mention of the grant of the patent: **12.12.2007**
(21) Application number: 05102434.7
(22) Date of filing: 25.03.2005
(51) Int. Cl.: B29D 30/48, B60C 15/04

(54) **Bead construction method and apparatus for a tire**
Verfahren und Vorrichtung zur Herstellung eines Reifenwulstes
Procédé et dispositf pour la formation d'un talon de pneu

(30) Priority: 01.04.2004 US 815568
(43) Date of publication of application: 05.10.2005
(73) Proprietor: THE GOODYEAR TIRE & RUBBER COMPANY, Akron, Ohio 44316-0001 (US)
(72) Inventor: Dyrlund, Christopher David, North Canton, OH Ohio 44720 (US); Burg, Gary Robert, Massillon, OH 44646 (US); Koch, Brian Richard, Hartville, OH 44632 (US); Huston, Dwayne Richard, Fairlawn, OH Ohio 44333 (US)
(74) Representative: Kutsch, Bernd

(56) References cited:
- EP-A- 0 472 958
- WO-A-00/35666
- US-A- 4 202 717
- PATENT ABSTRACTS OF JAPAN vol. 1999, no. 09, 30 July 1999 (1999-07-30) & JP 11 105155 A (BRIDGESTONE CORP), 20 April 1999 (1999-04-20)

## Description

### Field of the Invention

The invention relates to method and apparatus for the construction of an annular bead component for a tire built upon a rotating toroidal mandrel.

### Background of the Invention

It is known in the art to build a tire by sequentially laminating strips of tire component material to a rotating toroidal mandrel or core. The components applied to the mandrel in such a laminate fashion may include the tire bead comprising an annular tensile member wrapped by ply cords and shaped to fit the rim of rubber as a base. Some prior art exists wherein tire beads are built onto a rotating toroid by laminating strips of rubber as a base, followed by applying a single spiraled strand of wire/cable, a second layer of rubber, and so on until the appropriate number of bead strands are complete.

While a laminate method of building a tire on a toroidal mandrel is an improvement over alternative methods and has been widely accepted, several shortcomings to such an assembly process remain which prevents the method from representing a solution to all needs of the industry. First, a laminate assembly technique requires that each tire component, including the bead structure, be pre-made into solid strips. The strips are typically inventoried which further adds cost to the process. Storing the strips for a period of time may also cause a degradation in material performance characteristics and adversely affect the quality of a tire made therefrom. Moreover, the process of layering the pre-made bead strips onto a mandrel is laborious and relatively slow, adding cost to the manufactured product. Additionally, the placement and location of the cable(s) in a laminate process is not carefully controlled and the resultant bead structure may suffer from misalignment of the cable within the confines of inner and outer layers. The performance or quality of a tire suffering from cable misplacement may thus be compromised. In addition, the time demands in assembling a tire bead by means of sequentially laminating layers onto a mandrel pursuant to the prior art are considerable and add undesirably to the overall cost of tire manufacture.

EP-A- 0472958 discloses a method and apparatus for making an apexed bead ring. The method includes providing a supply of rubber and a supply of bead wire, wherein the rubber is extruded around at least one bead wire. An apex leaf projects from the rubber extruded around the bead wire to form a bead ribbon. The bead ribbon is wound spirally about itself to form a beard. Radially adjacent apex leafs contact one another to form an integral apex extending laterally from the bead.

JP-A-11105155 discloses a method to mold a bead filler using a linear rubber element being ejected from an injection molding machine which is laminated on a rotating molding disc.

WO-00/35666 describes a method and apparatus for forming a tire by manufacturing the tire components directly on a toroidal support.

US-A- 4,202,717 describes a pre-curing bead wire coating.

It is the object of the invention to provide an annular bead comprising an elastomeric component and a thread-like component wherein this assembly is closed to a final predetermined bead configuration being ready for application in a tire.

### Summary of the Invention

The above object is achieved according to the invention by the method as defined in claim 1 and by the apparatus as defined in claim 8.

Particular embodiments of the invention are the subject of the dependent claims.

To be able to build up an annular bead structure, consisting of an elastomeric component and a thread-like component of a metal or of another material, the subject invention simultaneously applies the two materials to a rotating toroidal support or mandrel. A nozzle, pressurized with elastomeric component material preferably at an elevated temperature, is placed in an interference relationship with a rotatable toroid support. The nozzle is provided with a relief at the application point such that the profile of the rubber being applied to the toroid will be determined on multiple sides by the relief in the nozzle ejection point and on an additional side by the surface of the toroid. A second path through the same nozzle is used to run a strand or strands of the thread-like material such that the rubber and strand(s) are applied simultaneously, thereby building up the tire bead component. The ejected elastomeric component and thread-like component may be applied to a pre-applied elastomeric layer on the toroid. Pursuant to the invention, a method is disclosed comprising the steps of placing an ejector nozzle in an interference position to a toroidal support or mandrel and placing and simultaneously ejecting through the nozzle a sufficiently elongate stream of the elastomeric component in a substantially semi-solid state and a sufficiently elongate length of at least one thread-like component disposed at a preferential location within the stream onto the toroid in a predetermined bead configuration. In the manner previously summarized a tire bead component is built sequentially onto a toroid support by the simultaneous ejection of elastomeric and cable components.

### Brief Description of the Drawings

The invention will be described by way of example and with reference to the accompanying drawings in which:
FIG. 1 is a perspective view shown partially in section of a toroidal support onto which an annular component is applied pursuant to the invention;
FIG. 2 is a cross sectional view of the toroidal support showing an ejector nozzle positioned in an interference relationship therewith;
FIG. 3 is an enlarged perspective view of an ejector nozzle configured pursuant to the invention; and
FIG. 4 is a front perspective view shown partially in cross-section of the ejector nozzle showing the relief configuration at the nozzle application point.

### Detailed Description of the Invention.

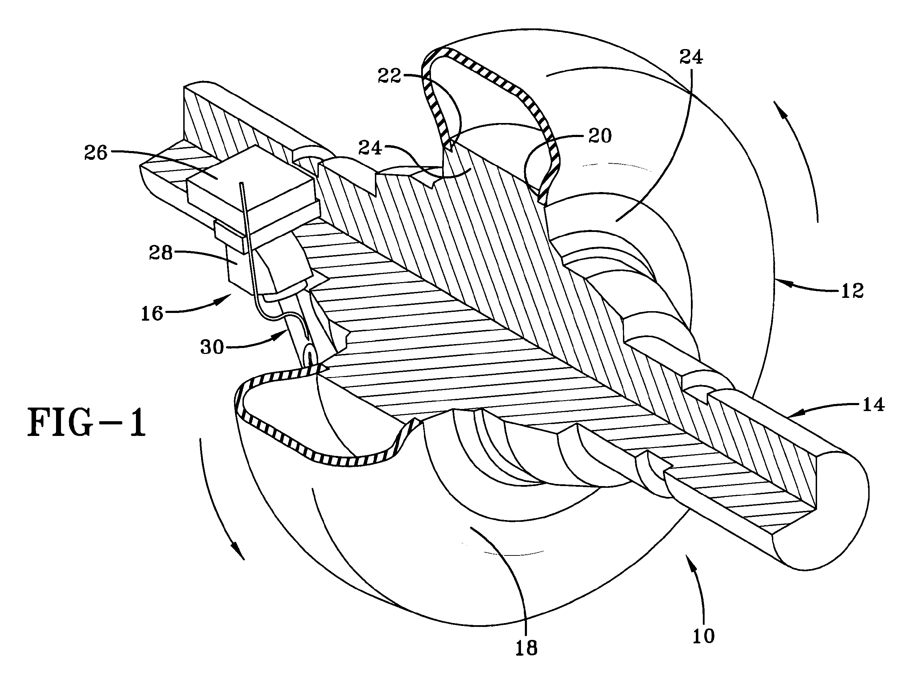

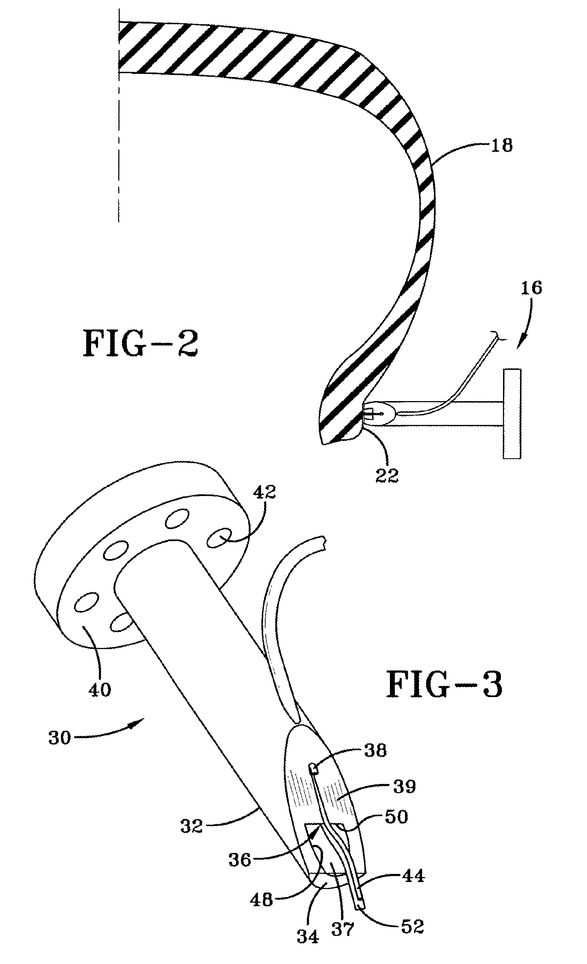

Referring initially to FIGS. 1 and 2, a tire building apparatus 10 is shown generally to include a rotatable toroidal support 12; an axial pivot drive shaft 14, and a bead component ejector assembly 16. The rotatable support 12, also referred herein as a mandrel, includes a toroidal tire shaping surface 18 coupled to a center hub 24 along annular edges 20, 22. The support 12 may be formed from any suitable material common to the industry such as steel. Support 12 may be of unitary, fixed geometrical construction or may comprise segments that collapse or otherwise move relatively to alter the geometry of the support during a tire build cycle. The drive shaft 14 is coupled to rotate the hub 24 and therefrom the annular surface 18 during a tire build. The surface 18 is configured to the shape of a tire to be built on the structure. It is contemplated that layers of elastomeric material such as rubber or a rubber composite will be applied to the surface 18 in a first stage of assembly to form a tire carcass. The carcass will normally include one or more plies, and a pair of sidewalls, a pair of apexes, an inner liner (for a tubeless tire), a pair of chafers and perhaps a pair of gum shoulder strips. Additional components may be used or even replace some of those mentioned above.

Typical tire building machines comprise a tire build drum around which the tire components are wrapped in successive layers including, for example, an inner liner, one or more carcass plies, optional sidewall stiffeners and bead area inserts (e.g., apex), sidewalls and bead wire rings (beads). After this layering, the carcass ply ends are wrapped around the beads, the tires are blown up into a toroidal shape, and the tread/belt package is applied. Typically the tire build drum is in a fixed location on the plant floor, and the various layers of components are applied manually or automatically using tooling registered to reference points on the fixed drum in order to ensure component placement with the desired degree of precision. The tooling is generally fixed relative to the tire building drum, for example a guide wheel on an arm extending from the same frame (machine base) which supports the tire building drum.

The subject invention is intended to provide a novel manner for building an annular component such as a tire bead onto the toroidal support 12. To facilitate the process the applicator assembly 16 is disposed adjacent to the rotating toroidal support 12 and, more specifically, adjacent surface 18 proximate an outer edge 22 thereof as illustrated in FIG. 2. The applicator assembly 16 comprises a mounting bracket 26 and an elastomeric component reservoir 28. As used herein, "elastomeric component" is preferably, but not necessarily, a rubber or rubber composite compound of a type common within the industry as a bead elastomer.

Referring to FIGS. 1, 2, and 3, the assembly 16 further includes an elongate ejector head assembly 30 comprising an elongate nozzle 32 extending to a forward tip 34. A first channel 36 has an opening 37 at the tip 34 and extends rearwardly along the longitudinal axis of the nozzle 32. The forward end of the nozzle includes a tapering surface 39 extending downward to the tip 34. A secondary cable channel 38 extends through a forward end of the nozzle 32 and exits at the sloping surface 39. A mounting annular collar flange 40 is disposed at a rearward end of nozzle 32 and includes a plurality of mounting apertures 42. The configuration and construction of the ejector head assembly 30 is intended to be representative of one of a plurality of alternative configurations that will be apparent to those skilled in the art. Other configurations that provide for the requisite simultaneous application of an elastomeric and cable component to a targeted annular surface, as explained below, are also intended to be within the scope of the invention.

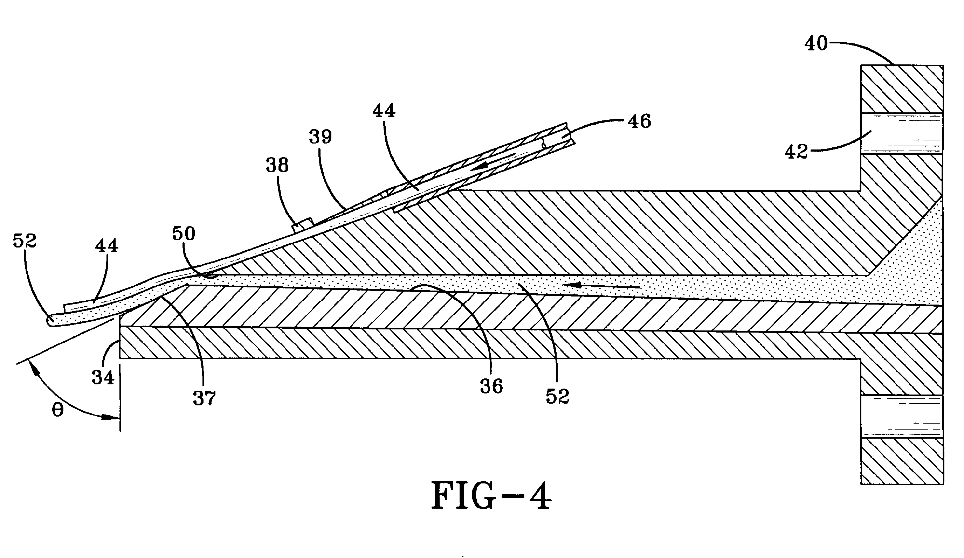

As best illustrated in FIG. 4, a cable 44 is provided that extends through the nozzle forward end to surface 39. The cable 44 is encased within a sheath or cavity 46 rearward of the forward nozzle end and extends therefrom to a cable supplying mechanism such as a spool (not shown) that feeds the cable axially forward to the forward end of nozzle 32 on demand. Cable 44 is constructed from suitable materials conventional to the industry in the construction of a bead cable such as, but not limited to steel. Cable 44 may comprise a single strand or a twisted construction of multiple strands if desired.

The forward end or tip 34 from which the elastomeric compound 52 exits the nozzle 32 as a stream is defined by a relief comprising opposing sidewalls 48 (one of which being shown in the section view FIG. 3) and inner end wall 50. The size and shape of the exit cavity or relief determines the sectional configuration of a stream of elastomeric compound exiting the nozzle 32. An angle α as shown in FIG. 4 is defined by the slope of the surface 39 and is preferably, but not necessarily, substantially sixty degrees. The relief angle affects application parameters such as flow characteristics and may be varied to adjust such parameters without departing from the invention.

It will be appreciated from FIGS. 1, 2, 3, and 4, the subject applicator assembly 16 intended for placement into an interference relationship with toroidal surface 18 of toroidal support body 12. As used herein, "interference" is meant a proximal relationship sufficiently close to the toroidal surface 18 such that material discharged from the nozzle will be placed at an intended location on surface 18. An "interference" relationship, therefore, may be but is not necessarily a contacting relationship between the nozzle and the surface 18. In the formation of an annular object, such as a tire, the annular support 12 may be rotated and components of the tire layered upon surface 18. Although it is preferable that the toroidal support 12 be rotated while the ejector assembly 16 is moved around the perimeter of the toroid to apply components as the toroid rotates, the practice of the invention is not intended to be so limited. In other configurations, the relative movement of the ejector system 16 and toroidal support may be alternately designed. Means for rotating the support drive shaft 14, the ejector assembly 16, and rotating support 12, are not shown. Suitable rotational drive motors and controls are commercially available and may be readily obtained for such a purpose.

In sequence, an annular bead structure may be constructed onto the support surface 18 pursuant to the invention by the simultaneous application of two materials to the rotating toroidal support. The two components comprise the elastomeric component 52 exiting as a stream from the relief opening in nozzle end 34 and a thread-like component, typically the cable 44 formed of metal or other material, exiting from the exit portal of the cable channel 38. As cable 44 exits from the cable channel 38 in a continuous manner, the cable 44 is disposed within the stream of elastomeric component material exiting from the relief exit cavity 37. The nozzle 32 is pressurized to a suitably high level and the elastomeric component material 52 is driven through the nozzle by conventional apparatus at a suitably elevated temperature to maintain the material 52 in a semi-solid state.

The nozzle ejects a stream of material 52 in a sectional profile determined by the configuration of the relief at the application point; the pressure exerted by the ejector assembly on the toroid; the rubber composite temperature and composition; and the nozzle pressure. The sectional profile of the rubber stream thus is determined on three sides by the sidewalls 48 and 50 of the relief and along a fourth side by the surface 18 of the rotating toroid support. Surface 18 thereby cooperates with the sidewall configuration of the relief to define the sectional shape of the rubber stream as the stream is applied under pressure in a semi-solid state to the rotating toroidal support. While the preferred embodiment recommends a stream of material 52 having a quadrilateral sectional profile, the invention envisions that the relief configuration at the tip of the nozzle may be varied if so desired into alternate configurations to create a stream of material having alternative sectional configurations.

The second channel through the same nozzle 32 is used to run a strand or strands 44 of the thread-like material of the bead. The feed of the cable 44 is directed into the stream of elastomeric component material 52 at an optimum location and the physical encasement of the cable within the stream in such a location ensures that the cable will be optimally located relative to the rotating toroidal support surface. A simultaneous application of the cable and elastomeric component layers thus achieves an efficiency of manufacture as well as an improved accuracy in the placement of the cable within the elastomeric rubber stream and subsequently against the rotating toroidal support. Moreover, the strand 44 may be cut and stopped, while rubber continues to be applied, or the strand 44 may be started into an already flowing stream of material 52.

It is envisioned that the elastomeric component material 52 will be supplied to the application point of the nozzle as a semi-solid, having a sufficiently low viscosity to retain a shape defined by the nozzle relief and the rotating toroid but a sufficiently high viscosity for controlled, pressurized ejection from the nozzle. The rubber material, once applied to the rotating toroidal support, fuses to the rubber-based tire components pre-positioned thereon. The application of a semi-solid bead elastomeric rubber to the pre-disposed tire layers upon the rotating toroid support establishes a positive bond. In addition, the cable(s) disposed within the rubber stream, being applied simultaneously with the rubber component, affords the additional advantage of holding the cable(s) 44 in place with the rubber 52 by essentially providing a coat layer on top or on all sides of the cable. The toroidal surface 18 is thus encircled by an annular bead formed by simultaneous application of the elastomeric component material and the cable component. Thereafter, the remaining tire components may be built to the annular support 12 and cured in a conventional manner to form a finished product.

While the subject invention finds particular application in the formation of a tire bead, other applications are possible. By way of example, the subject disclosure can also find general application in the creation of any elastomeric annular body, including tire belts, spiral overlays, and ply components, wherein a portion of the annular body construction consists of a thread-like component ensheathed within an elastomeric component. A simultaneous application of such a thread-like component with an elastomeric component from a nozzle ejection system would, in such applications, prove beneficial.

## Claims

1. A method of manufacturing an annular bead comprising an elastomeric component (52) and at least one thread-like component (44), the method comprising the steps of:
(a) locating a toroidal support (12);
(b) placing a nozzle (32) in a proximal relationship sufficiently close to a surface (18) of the toroidal support (12) such that material discharged from the nozzle (32) will be placed at an intended location on the surface (18);
(c) placing and at least for a period of time simultaneously applying through the nozzle (32) a sufficiently elongate stream of the elastomeric component (52) in a substantially semi-solid state and a sufficiently elongate length of the at least one thread-like component (44) disposed within the stream onto the surface (18) of the toroidal support (12) in a predetermined bead configuration, wherein the predetermined bead configuration at the application point of the nozzle (32) is at least partially defined by a relief in the nozzle (32).

2. The method of claim 1, further comprising the step of:
(d) rotating the toroidal support (12) during application of the elastomeric component (52) and the at least one thread-like component (44) from the nozzle.

3. The method of claim 1 or 2, further comprising the step of:
(e) rotating the toroidal support (12) and the elastomeric layer thereon simultaneously with application of the elastomeric component (52) and at least one thread-like component (44) from the nozzle (32).

4. The method of claim 1, 2 or 3, further comprising the step of:
(f) pre-layering an elastomeric layer on the toroidal support (12).

5. The method of at least one of the previous claims, further comprising the step of at least partially defining a side of the predetermined bead configuration by the toroidal support (12), and/or further comprising the step of defining at least three sides of the predetermined bead configuration by at least three sides of the relief in the nozzle (32) and at least one side by the toroidal support (12).

6. The method of claim 1, further comprising the step of pressurizing the elastomeric component (52) at an elevated temperature within the nozzle (32) prior to application.

7. The method of claim 1, further comprising the steps of positioning the at least one thread-like component (44) at a location within the stream and maintaining the at least one thread-like component (44) in this location during a post-application curing of the elastomeric component (52), wherein said location preferably is in the middle of the stream.

8. An apparatus for forming an annular bead for a tire of a type comprising an elastomeric component (52) and at least one thread-like component (44), the apparatus (10) comprising a toroidal support (12) and nozzle means (32) disposed in a proximal relationship sufficiently close to a surface (18) of the toroidal support (12) such that material discharged from the nozzle means (32) will be placed at an intended location on the surface (18); wherein the nozzle means (32) has an elongate ejector head assembly (30) extending to a forward end (34) as an ejection portal, the forward end (34) being defined by a relief comprising opposing sidewalls (48) and an inner end wall (50), wherein the elongate ejector head assembly (30) is configured to eject simultaneously an elongate stream of the elastomeric component (52) in a substantially semi-solid state and an elongate length of the at least one thread-like component (44) disposed within the stream onto the toroidal support (12) in a predetermined bead configuration, and wherein the predetermined bead configuration is at least partially defined by the relief.

9. The apparatus according to claim 8, further comprising means for rotating the toroidal support (12) relative to the nozzle means (32).

10. The apparatus according to claim 8 or 9, wherein the predetermined bead configuration is at least partially defined by the toroidal support (12) and the ejection portal relief.

## Patentansprüche

1. Verfahren zur Herstellung eines ringförmigen Wulstes, umfassend eine elastomere Komponente (52) und mindestens eine fadenartige Komponente (44), wobei das Verfahren die Schritte:
(a) des Anordnens einer toroidalen Stütze (12);
(b) des Platzierens einer Düse (32) in einer proximalen Beziehung, die ausreichend nahe an einer Oberfläche (18) der toroidalen Stütze (12) ist, so dass Material, das aus der Düse (32) abgegeben wird, an einer beabsichtigten Stelle auf der Oberfläche (18) platziert wird;
(c) des Platzierens und zumindest für einen Zeitraum des gleichzeitigen Auftragens durch die Düse (32) von einem ausreichend langen Strom der elastomeren Komponente (52) in einem im wesentlichen halbfesten Zustand und einer ausreichend langen Länge der mindestens einen fadenartigen Komponente (44), die in dem Strom angeordnet ist, auf die Oberfläche (18) der toroidalen Stütze (12) in einer vorbestimmten Wulstkonfiguration, wobei die vorbestimmte Wulstkonfiguration an dem Auftragpunkt der Düse (32) zumindest teilweise durch ein Relief in der Düse (32) definiert ist,
umfasst.

2. Verfahren nach Anspruch 1, ferner umfassend den Schritt:
(d) des Drehens der toroidalen Stütze (12) während des Auftrags der elastomeren Komponente (52) und der mindestens einen fadenartigen Komponente (44) aus der Düse.

3. Verfahren nach Anspruch 1 oder 2, ferner umfassend den Schritt:
(e) des Drehens der toroidalen Stütze (12) und der elastomeren Schicht darauf gleichzeitig mit dem Auftrag der elastomeren Komponente (52) und der mindestens einen fadenartigen Komponente (44) aus der Düse (32).

4. Verfahren nach Anspruch 1, 2 oder 3, ferner umfassend den Schritt:
(f) der Vorschichtung einer elastomeren Schicht auf der toroidalen Stütze (12).

5. Verfahren nach mindestens einem der vorhergehenden Ansprüche, ferner umfassend den Schritt des zumindest teilweise Definierens einer Seite der vorbestimmten Wulstkonfiguration durch die toroidale Stütze (12) und/oder ferner umfassend den Schritt des Definierens mindestens dreier Seiten der vorbestimmten Wulstkonfiguration durch mindestens drei Seiten des Reliefs in der Düse (32) und mindestens einer Seite durch die toroidale Stütze (12).

6. Verfahren nach Anspruch 1, ferner umfassend den Schritt des unter Druck Setzens der elastomeren Komponente (52) bei einer erhöhten Temperatur in der Düse (32) vor dem Auftrag.

7. Verfahren nach Anspruch 1, ferner umfassend die Schritte des Positionierens der mindestens einen fadenartigen Komponente (44) an einer Stelle innerhalb des Stroms und des Beibehaltens der mindestens einen fadenartigen Komponente (44) in dieser Position während einer Vulkanisation nach dem Auftrag der elastomeren Komponente (52), wobei die Position bevorzugt in der Mitte des Stroms ist.

8. Vorrichtung zur Bildung eines ringförmigen Wulstes für einen Reifen von einem Typ, der eine elastomere Komponente (52) und mindestens eine fadenartige Komponente (44) umfasst, wobei die Vorrichtung (10) umfasst eine toroidale Stütze (12) und eine Düseneinrichtung (32), die in einer proximalen Beziehung ausreichend nahe an einer Oberfläche (18) der toroidalen Stütze (12) angeordnet ist, so dass Material, das aus der Düseneinrichtung (32) abgegeben wird, an einer beabsichtigten Stelle auf der Oberfläche (18) platziert wird; wobei die Düseneinrichtung (32) eine gestreckte Ausstoßkopfanordnung (30) aufweist, die sich zu einem vorderen Ende (34) als Ausstoßportal erstreckt, wobei das vordere Ende (34) durch ein Relief umfassend gegenüberliegende Seitenwände (48) und eine innere Endwand (50) definiert ist, wobei die gestreckte Ausstoßkopfvorrichtung (30) gestaltet ist, um gleichzeitig einen langen Strom der elastomeren Komponente (52) in einem im wesentlichen halbfesten Zustand und eine lange Länge der mindestens einen fadenartigen Komponente (44), die innerhalb des Stroms angeordnet ist, auf die toroidale Stütze (12) in einer vorbestimmten Wulstkonfiguration auszustoßen, und wobei die vorbestimmte Wulstkonfiguration zumindest teilweise durch das Relief definiert ist.

9. Vorrichtung nach Anspruch 8, ferner umfassend eine Einrichtung zum Drehen der toroidalen Stütze (12) relativ zur Düseneinrichtung (32).

10. Vorrichtung nach Anspruch 8 oder 9, wobei die vorbestimmte Wulstkonfiguration zumindest teilweise durch die toroidale Stütze (12) und das Ausstoßportalrelief definiert ist.

## Revendications

1. Procédé de fabrication d'un talon annulaire comprenant un composant élastomère (52) et au moins un composant analogue à un fil (44), le procédé comprenant les étapes consistant à :
(a) disposer un support toroïdal (12) ;
(b) placer une buse (32) à un endroit proximal suffisamment proche de la surface (18) du support toroïdal (12) de telle sorte que la matière quittant la buse (32) vient se placer à un endroit prévu sur la surface (18) ;
(c) placer et, au moins pendant un certain laps de temps, appliquer de manière simultanée via la buse (32) un courant suffisamment allongé du composant élastomère (52) dans un état essentiellement semi-solide et une longueur suffisamment allongée dudit au moins un composant analogue à un fil (44) disposé au sein du courant, sur la surface (18) du support toroïdal (12) dans une configuration de talon prédéterminée, la configuration de talon prédéterminée à l'endroit d'application de la buse (32) étant définie au moins en partie par un relief dans la buse (32).

2. Procédé selon la revendication 1, comprenant en outre l'étape consistant à :
(d) faire tourner le support toroïdal (12) lors de l'application du composant élastomère (52) et dudit au moins un composant analogue à un fil (44), à partir de la buse.

3. Procédé selon la revendication 1 ou 2, comprenant en outre l'étape consistant à :
(e) faire tourner le support toroïdal (12) et la couche élastomère sur le premier cité de manière simultanée à l'application du composant élastomère (52) et d'au moins un composant analogue à un fil (44) à partir de la buse (32).

4. Procédé selon la revendication 1, 2 ou 3, comprenant l'étape consistant à :
- déposer au préalable une couche élastomère du support toroïdal (12).

5. Procédé selon au moins une des revendications précédentes, comprenant en outre l'étape consistant à définir au moins en partie un côté de la configuration de talon prédéterminée par le support toroïdal (12), et/ou comprenant en outre l'étape consistant à définir au moins trois côtés de la configuration de talon prédéterminée par au moins trois côtés du relief dans la buse (32) et au moins un côté par le support toroïdal (12).

6. Procédé selon la revendication 1, comprenant en outre l'étape consistant à mettre le composant élastomère (52) sous pression à une température élevée au sein de la buse (32) avant l'application.

7. Procédé selon la revendication 1, comprenant en outre les étapes consistant à disposer ledit au moins un composant analogue à un fil (44) à un endroit au sein du courant et à maintenir ledit au moins un composant analogue à un fil (44) dans cet endroit au cours d'une vulcanisation par application ultérieure du composant élastomère (52), ledit endroit étant de préférence situé au centre du courant.

8. Appareil pour former un talon annulaire pour un bandage pneumatique du type comprenant un composant élastomère (52) et au moins un composant analogue à un fil (44), l'appareil (10) comprenant un support toroïdal (12) et un moyen en forme de buse (32) disposé à un endroit proximal suffisamment proche de la surface (18) du support toroïdal (12) de telle sorte que la matière quittant la buse (32) vient se placer à un endroit prévu sur la surface (18) ; le moyen (32) en forme de buse possédant un assemblage de tête d'éjection allongée (30) s'étendant jusqu'à une extrémité avant (34) sous la forme d'un orifice d'éjection, l'extrémité avant (34) étant définie par un relief comprenant des parois latérales opposées (48) et une paroi terminale interne (50), l'assemblage de tête d'éjection allongée (30) étant configuré pour éjecter simultanément un courant allongé du composant élastomère (52) et une étendue allongée dudit au moins un composant (44) analogue à un fil disposé au sein du courant, sur le support toroïdal (12) dans une configuration de talon prédéterminée, la configuration de talon prédéterminée étant définie, au moins en partie, par le relief.

9. Appareil selon la revendication 8, comprenant en outre un moyen pour faire tourner le support toroïdal (12) par rapport au moyen (32) en forme de buse.

10. Appareil selon la revendication 8 ou 9, dans lequel la configuration de talon prédéterminée est définie, au moins en partie, par le support toroïdal (12) et par le relief de l'orifice d'éjection.
